# EUROPÄISCHE PATENTSCHRIFT

(11) **EP 4 381 253 B1**
(45) Veröffentlichungstag und Bekanntmachung des Hinweises auf die Patenterteilung: **10.06.2026**
(21) Anmeldenummer: 22748369.0
(22) Anmeldetag: 22.07.2022
(51) Int. Cl.: G01F 1/84, G01F 15/00, G01F 25/10

(54) **VERFAHREN ZUM BETREIBEN EINES CORIOLIS-MESSGERÄTS**
METHOD FOR OPERATING A CORIOLIS METER
PROCÉDÉ POUR FAIRE FONCTIONNER UN APPAREIL DE MESURE À EFFET DE CORIOLIS

(30) Priorität: 05.08.2021 DE 102021120452
(43) Veröffentlichungstag der Anmeldung: 12.06.2024
(73) Patentinhaber: Endress+Hauser Flowtec AG, 4153 Reinach (CH)
(72) Erfinder: POHL, Johan, 79110 Freiburg (DE); SCHERRER, Rémy, 68960 Oberdorf (FR); ZHU, Hao, 85354 Freising (DE)
(74) Vertreter: Endress + Hauser Group Services (Deutschland) AG+Co. KG
(86) Internationale Anmeldenummer: PCT/EP2022/070599
(87) Internationale Veröffentlichungsnummer: WO 2023/011944

(56) Entgegenhaltungen:
- EP-B1- 4 127 612
- US-A- 5 228 327
- US-A1- 2013 228 003
- US-A1- 2020 249 063
- US-B2- 7 337 084

## Beschreibung

Die Erfindung betrifft ein Verfahren zum Betreiben eines Coriolis-Messgeräts zum Messen einer Dichte und/oder eines Massedurchflusses eines durch eine Rohrleitung strömenden Messgeräts.

Bei Coriolis-Messgeräten, siehe dazu beispielsweise die DE102016125537A1, wird zumindest ein Messrohr zu Schwingungen angeregt. Ein durch das Messrohr strömendes Medium verursacht dabei charakteristische Verzerrungen dieser Schwingungen. Diese Schwingungen werden dabei üblicherweise von zwei Sensoren erfasst und von einer elektronischen Mess-/Betriebsschaltung ausgewertet. Aufgrund von Fertigungsungenauigkeiten sind die Sensoren messtechnisch sehr häufig leicht asymmetrisch, was bedeutet, dass bei Nulldurchfluss ein geringer Durchfluss gemessen wird. Diese Asymmetrie kann nach einer initialen Kalibrierung des Messgeräts korrigiert werden. Abweichungen von dieser Kalibration stellen eine eigene Messgröße dar. Jedoch kann diese Messgröße stark verrauscht sein. Das Dokument US 2013/228003 A1 zeigt ein Verfahren zum Betreiben eines Coriolis-Messgeräts aus dem Stand der Technik.

Aufgabe der Erfindung ist es daher, ein Verfahren vorzuschlagen, mittels welchem die Messwerte der Messgröße betreffend Abweichungen der Sensorasymmetrie von einem Ursprungszustand stabilisiert werden.

Die Aufgabe wird gelöst durch ein Verfahren gemäß dem unabhängigen Anspruch 1.

Bei einem erfindungsgemäßen Verfahren zum Betreiben eines Coriolis-Messgeräts zum Messen einer Dichte und/oder eines Massedurchflusses eines durch eine Rohrleitung strömenden Mediums, umfasst das Coriolis-Messgerät zumindest ein Messrohr zum Führen des Mediums mit jeweils einem Einlauf und einem Auslauf und eine ein Messrohrlumen einschließende Messrohrwandung; zumindest einen Erreger zum Erzeugen von Messrohrschwingungen sowie einen einlaufseitigen ersten Sensor und einen auslaufseitigen zweiten Sensor zum Erfassen von Messrohrschwingungen, wobei der Erreger sowie die Sensoren jeweils eine Spulenvorrichtung mit mindestens einer Spule und jeweils eine Magnetvorrichtung mit mindestens einem Magnet aufweisen,
wobei die Spulenvorrichtung sowie die Magnetvorrichtung eines jeden Sensors durch Messrohrschwingungen relativ zueinander bewegt werden, wobei in der Spule dabei eine elektrische Messspannung induziert wird;
eine elektronische Mess-/Betriebsschaltung zum Betreiben des Erregers, zum Erfassen und Auswerten der elektrischen Messspannungen sowie zum Ausgeben von Messwerten von Dichte und/oder Massedurchflusses sowie von Diagnoseangaben,
wobei das Verfahren folgende Schritte aufweist:
   Aufnehmen der Messspannungen der Sensoren sowie Erstellen einer Asymmetrie-Wertefolge mittels der Amplituden der Messpannungen zwecks Diagnose des Coriolis-Messgeräts,
   Überprüfen, ob die Asymmetrie-Wertefolge mindestens ein Ungültigkeitskriterium erfüllt,
   Erstellen einer stabilisierten Asymmetrie-Wertefolge basierend auf der Asymmetrie-Wertefolge durch Ersetzen von Asymmetrie-Messwerten durch Ersatzwerte, wobei während Erfüllen eines Ungültigkeitskriteriums ein letzter gültiger Messwert der Asymmetrie-Wertefolge als aktueller Wert der stabilisierten Asymmetrie-Wertefolge herangezogen oder die stabilisierte Asymmetrie-Wertefolge auf einen vorherbestimmten Wert gesetzt wird,
   wobei das erste Ungültigkeitskriterium auf einer Überschreitung eines ersten Grenzwerts durch einen Streuungsparameter der Asymmetrie-Wertefolge basiert.

Zur Erstellung der Asymmetrie-Wertefolge kann dabei ein Verhältnis einer absoluten Abweichung von Amplituden der Messspannungen zu einem Mittelwert der Amplituden der Messspannungen gebildet werden.

Vorherbestimmte Werte als Ersatzwert können beispielsweise Null oder NaN (Not a number) oder sonstige Werte sein, welche eine Ungültigkeit der Asymmetrie-Wertefolge zu gewissen Zeitpunkten oder in gewissen Zeitbereichen hervorheben. Auf diese Weise kann die elektronische Mess-/Betriebsschaltung erkennen, ob Werte der Asymmetrie-Wertefolge Messwerten der Asymmetrie entsprechen, oder ob die Werte im Hinblick auf eine Bestimmung beispielsweise eines Coriolis-Messgerätzustands zu ignorieren sind.

Insbesondere bei einem Medium mit mehreren Medienbestandteilen gegebenenfalls in verschiedenen Aggregatzuständen vorliegend kann die Asymmetrie-Wertefolge zeitweise stark von einem Durchschnittswert abweichen und somit störend verfälscht sein, so dass ein Ersetzen von Werten der Asymmetrie-Wertefolge durch einen letzten gültigen Wert oder durch einen vorbestimmten Wert eine deutlich stabilere Asymmetrie-Wertefolge liefert.

In einer Ausgestaltung basiert ein zweites Ungültigkeitskriterium auf einer Überschreitung oder Unterschreitung eines zweiten Grenzwerts durch eine Resonanzfrequenz des Messrohrs mit Medium oder einer davon abgeleiteten Größe wie beispielsweise einer Dichte.

Es kann beispielsweise auch ein Mittelwert oder eine Standardabweichung der Resonanzfrequenz oder bzw. der davon abgeleiteten Größe herangezogen werden.

Beispielsweise kann der zweite Grenzwert ein Absolutwert einer Abweichung der Resonanzfrequenz von einem Mittelwert sein.

In einer Ausgestaltung wird das erste Ungültigkeitskriterium in einem ersten gleitenden Zeitfenster ausgewertet.

In einer Ausgestaltung wird das zweite Ungültigkeitskriterium in einem zweiten gleitenden Zeitfenster ausgewertet.

In einer Ausgestaltung weist das erste Zeitfenster eine Zeitdauer von mindestens 0.2 Sekunden und insbesondere mindestens 0.5 Sekunden und bevorzugt mindestens 1 Sekunde auf und/oder das erste Zeitfenster weist eine Zeitdauer von höchstens 90 Sekunden und insbesondere höchstens 70 Sekunden und bevorzugt höchstens 60 Sekunden auf.

In einer Ausgestaltung weist das zweite Zeitfenster eine Zeitdauer von mindestens 2 Sekunden und insbesondere mindestens 4 Sekunden und bevorzugt mindestens 5 Sekunden auf und/oder wobei das zweite Zeitfenster eine Zeitdauer von höchstens 150 Sekunden und insbesondere höchstens 130 Sekunden und bevorzugt höchstens 120 Sekunden aufweist.

In einer Ausgestaltung wird, falls die Zeit- oder Phasendifferenz oder eine davon abgeleitete Größe einen zweiten Grenzwert unterschreitet und die Asymmetrie einen dritten Grenzwert überschreitet,
ein letzter gültiger Messwert der Asymmetrie-Wertefolge als aktueller Wert der Asymmetrie-Wertefolge herangezogen,
oder der aktuelle Wert der Asymmetrie-Wertefolge auf einen vorherbestimmten Wert gesetzt.

Auf diese Weise kann eine Asymmetrie verursachende Teilfüllung des Messrohrs bei stehendem Medium erkannt und aussortiert werden. Der zweite Grenzwert kann dabei beispielsweise einem Wert von weniger als 5% und insbesondere weniger als 1% und bevorzugt weniger als 0.1% eines maximalen spezifizierten Massedurchflusses entsprechen. Der dritte Grenzwert kann beispielsweise eine Asymmetrie von mindestens 0.1% und insbesondere mindestens 1% und bevorzugt mindestens 5% sein.

In einer Ausgestaltung wird der Streuungswert durch eine der folgenden Vorgehensweisen bestimmt:
Summieren über Abstände benachbarter Messwerte,
Summieren über Abstände der Messwerte zu einem Mittelwert von Messwerten der Stabilisierungsgröße.

In einer Ausgestaltung weist ein Abstandsmaß A folgenden Zusammenhang auf:
A=|p1 - p2|^n mit n > 0, und p1 als Messwert und p2 als Messwert oder ein Mittelwert. Bevorzugt ist n dabei eine Zahl größer 0.5 und maximal 4. Es ist dabei nicht ausgeschlossen, dass der Zusammenhang weitere Terme aufweist oder mittels eines Faktors abgeändert wird.

In einer Ausgestaltung wird eine Warnung ausgegeben, falls ein Betrag der stabilisierten Asymmetrie-Wertefolge einen Grenzwert überschreitet.

Im Folgenden wird die Erfindung anhand von Ausführungsbeispielen beschrieben.
Fig. 1 beschreibt ein beispielhaftes Coriolis-Messgerät;
Fig. 2 zeigt beispielhafte Verläufe von Messsignalen;
Fig. 3 skizziert den Ablauf eines erfindungsgemäßen Verfahrens;

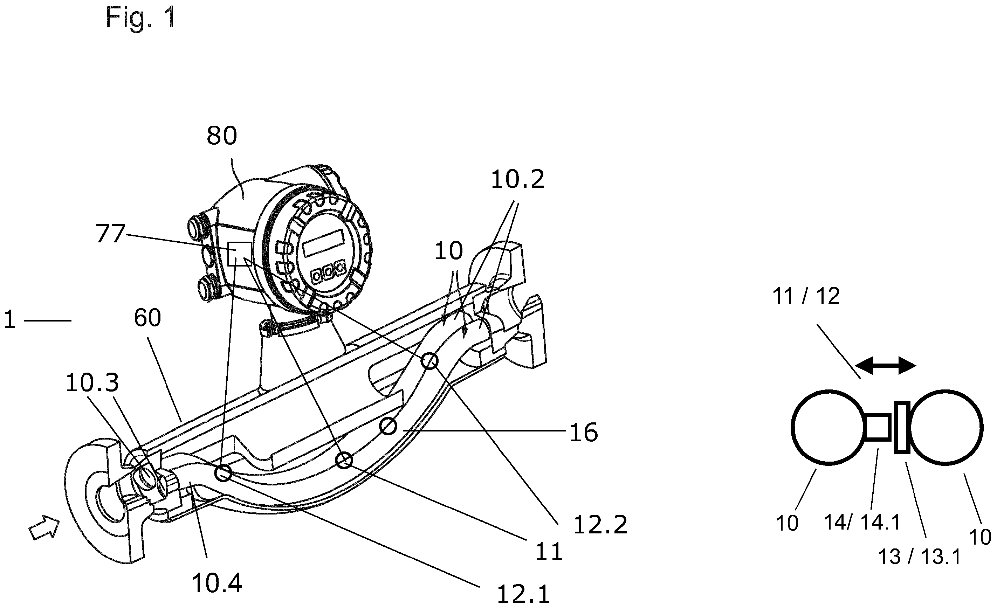

Fig. 1 zeigt ein beispielhaftes Coriolis-Messgerät 1 zum Messen eines Massedurchflusses oder einer Dichte eines durch eine Rohrleitung strömenden Mediums umfassend zwei Messrohre 10 mit jeweils einem Einlauf 10.1 und einem Auslauf 10.2, wobei eine Messrohrwandung 10.4 ein Messrohrlumen 10.3 einschließt. Die Messrohre werden durch einen Erreger 11 zum Schwingen angeregt, ein einlaufseitiger erster Sensor 12.1 und ein auslaufseitiger zweiter Sensor 12.2 erfassen die Messrohrschwingungen und erzeugen Messsignale, welche durch eine in einem Gehäuse 80 angeordnete elektronische Mess-/Betriebsschaltung 77 ausgewertet werden. Die Messrohre werden dabei durch einen Trägerkörper gehalten. Sensor und Erreger können dabei wie hier gezeigt, jeweils eine Spulenvorrichtung 13 mit einer Spule 13.1 und eine Magnetvorrichtung 14 mit einem Magnet 14.1 aufweisen, wobei Spulenvorrichtung und Magnetvorrichtung durch Messrohrschwingungen Relativbewegungen erfahren. Durch die Relativbewegung werden in der Spule elektrische Spannungen induziert und somit elektrische Ströme verursacht, welche von der elektronischen Mess-/Betriebsschaltung verarbeitet werden. Das Messsignal kann dabei die elektrische Spannung oder der elektrische Strom sein. Da auch bei Coriolis-Messgeräten Ungenauigkeiten bei der Produktion und bei der Fertigung existieren, sind verschiedene Sensoren nicht exakt gleich, so dass sie unter gleichen Bedingungen leicht unterschiedliche Messsignale produzieren, was sich beispielsweise in unterschiedlichen Amplituden von Messsignalen äußert. Diese Asymmetrie zwischen den Sensoren kann als weitere Messgröße genutzt werden, um beispielsweise einen Betriebszustand oder einen Abnutzungszustand des Coriolis-Messgeräts erkennen zu können.

Coriolis-Messgeräte können auch nur ein Messrohr oder auch mehr als zwei Messrohre aufweisen. Ein Fachmann wird den Erreger sowie die Sensoren dann entsprechend anpassen. Spulenvorrichtung und Magnetvorrichtung können beispielsweise jeweils an einem Messrohr angeordnet sein, sie können beispielsweise aber auch über eine jeweils Haltevorrichtung am Trägerkörper befestigt sein. Coriolis-Messgeräte können auch mehr als einen Erreger und/oder auch mehr als zwei Sensoren aufweisen.

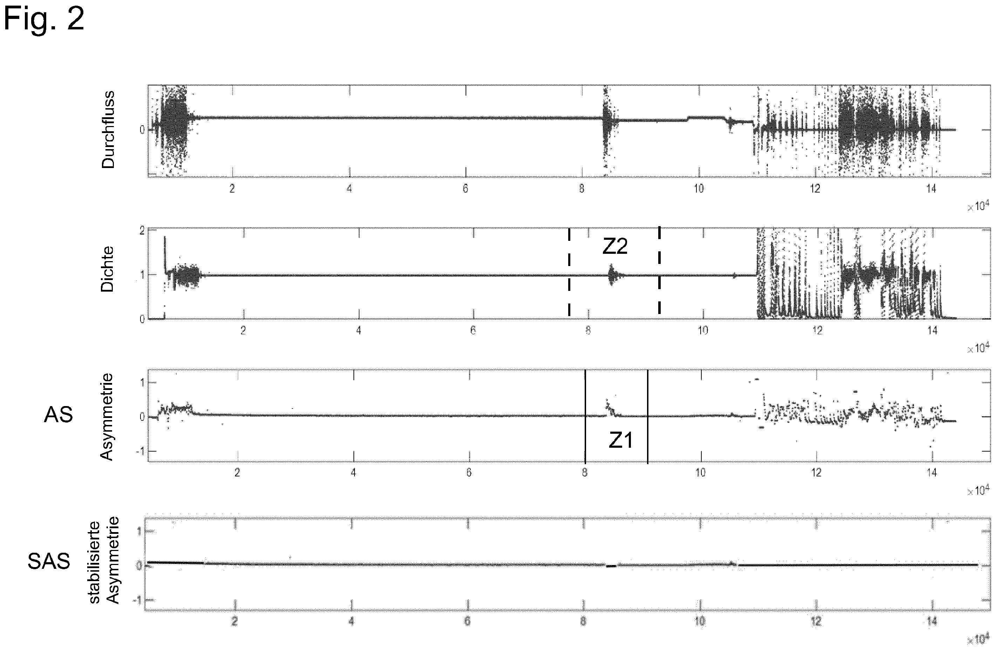

Fig. 2 skizziert beispielhafte Verläufe von Messsignalen betreffend Massedurchfluss, Dichte und Asymmetrie der Sensoren. Die Skalierung der Achsen ist dabei in beliebigen Einheiten gegeben und rein beispielhaft. Bei homogenem Medium ist der Verlauf von gemessener Dichte und gemessenem Durchfluss gewöhnlich wenig veränderlich. Bei einem Medium mit verschiedenen nicht oder schwer mischbaren Anteilen und/oder Anteilen mit verschiedenen Aggregatzuständen kann es wie in den beispielhaften Messsignalkurven gezeigt zu kurzfristigen, plötzlich einsetzenden und plötzlich aussetzenden Signalschwankungen kommen. Diese sind darauf zurückzuführen, dass im Bereich der Sensoren lokale Schwankungen der Mediumszusammensetzung die Messrohre im Bereich der Sensoren unterschiedlich beeinflussen. Während solcher Phasen ist die Asymmetrie-Wertefolge AS nicht zu gebrauchen.

Wie bei dem Messsignalverlauf der Dichte sowie der Asymmetrie beispielhaft gezeigt, kann innerhalb von gleitenden Zeitfenstern Z1, Z2 geprüft werden, ob das Asymmetrie-Messsignal ein erstes Ungültigkeitskriterium erfüllt bzw. ob eine Resonanzfrequenz des Messrohrs mit Medium oder einer davon abgeleiteten Größe wie beispielsweise hier gezeigt einer Dichte ein zweites Ungültigkeitskriteriums erfüllt.

Das erste Ungültigkeitskriterium basiert dabei beispielsweise auf einer Überschreitung eines ersten Grenzwerts durch einen Streuungsparameter der Asymmetrie-Wertefolge. Das zweite Ungültigkeitskriterium basiert dabei beispielsweise auf einer Überschreitung eines zweiten Grenzwerts durch eine Resonanzfrequenz des Messrohrs mit Medium oder einer davon abgeleiteten Größe wie beispielsweise hier gezeigt einer Dichte.

Eine stabilisierte Asymmetrie-Wertefolge SAS wird erstellt basierend auf der Asymmetrie-Wertefolge durch Ersetzen von Asymmetrie-Messwerten durch Ersatzwerte in einem dritten Verfahrensschritt 103, wobei während Erfüllen eines Ungültigkeitskriteriums ein letzter gültiger Messwert der Asymmetrie-Wertefolge als aktueller Wert der stabilisierten Asymmetrie-Wertefolge herangezogen oder die stabilisierte Asymmetrie-Wertefolge auf einen vorherbestimmten Wert gesetzt wird, wobei ein erstes Ungültigkeitskriterium auf einer Überschreitung eines ersten Grenzwerts durch einen Streuungsparameter der Asymmetrie-Wertefolge basiert.

Bei Nichterfüllen des mindestens einen Ungültigkeitskriteriums werden Werte der Asymmetrie-Wertefolge AS übernommen.

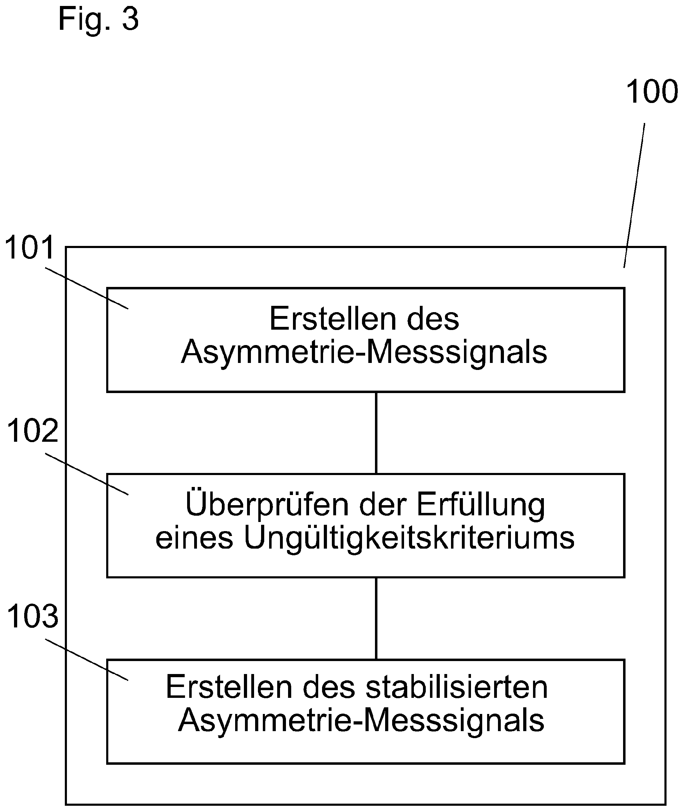

Fig. 3 beschreibt den Ablauf eines beispielhaften erfindungsgemäßen Verfahrens zur Stabilisierung der Asymmetrie-Wertefolge.

In einem ersten Verfahrensschritt 101 wird aus den Messsignalen der Sensoren 12.1 und 12.2 eine Asymmetrie-Wertefolge AS erstellt, wobei beispielsweise auf Amplituden der Messsignale der Sensoren zurückgegriffen wird.

In einem zweiten Verfahrensschritt 102 wird überprüft, ob die Asymmetrie-Wertefolge mindestens ein Ungültigkeitskriterium erfüllt.

In einem dritten Verfahrensschritt 103 wird die Asymmetrie-Wertefolge durch Ersatz von Werten der Asymmetrie-Wertefolge stabilisiert und eine Asymmetrie-Wertefolge SAS gebildet, wobei während Erfüllen eines Ungültigkeitskriteriums ein letzter gültiger Messwert der Asymmetrie-Wertefolge als aktueller Wert der stabilisierten Asymmetrie-Wertefolge herangezogen oder die stabilisierte Asymmetrie-Wertefolge auf einen vorherbestimmten Wert gesetzt wird.

Beispielsweise wird eine Streuung des Messsignals der Asymmetrie-Wertefolge bestimmt und bei Überschreiten eines ersten Grenzwerts durch den Streuungswert ein letzter gültiger Messwert der Asymmetrie-Wertefolge als aktueller Wert des Asymmetrie-Messwerts herangezogen, oder die Asymmetrie-Wertefolge auf einen vorherbestimmten Wert gesetzt. Auf diese Weise kann die Asymmetrie-Wertefolge so aufgearbeitet werden, dass es beispielsweise von der elektronischen Mess-/Betriebsschaltung auf eine sinnvolle Art und Weise interpretiert und verarbeitet werden kann. Typische Werte für einen vorbestimmten Wert sind beispielsweise NaN (Not a number), 0, oder ein Wert außerhalb eines typischen Wertebereichs der Asymmetrie-Wertefolge wie beispielsweise 1000. Dies ist unter Stabilisierung der Asymmetrie-Wertefolge zu verstehen.

Es kann eine Summe von Abständen von benachbarten Messwerten innerhalb des Zeitfensters Z2 gebildet werden, um die Streuung zu berechnen. Es kann auch eine Summe von Abständen von Messwerten zum Mittelwert innerhalb des Zeitfensters Z2 gebildet werden, um die Streuung zu berechnen, wobei der Mittelwert aus Messwerten innerhalb eines Zeitfensters Z1 gebildet ist.

Beispielsweise weist das erste Zeitfenster Z1 eine Zeitdauer von mindestens 0.2 Sekunden und insbesondere mindestens 0.5 Sekunden und bevorzugt mindestens 1 Sekunde auf und/oder wobei das erste Zeitfenster eine Zeitdauer von höchstens 90 Sekunden und insbesondere höchstens 70 Sekunden und bevorzugt höchstens 60 Sekunden aufweist. Beispielsweise weist das zweite Zeitfenster Z2 eine Zeitdauer von mindestens 2 Sekunden und insbesondere mindestens 4 Sekunden und bevorzugt mindestens 5 Sekunden auf und/oder wobei das zweite Zeitfenster eine Zeitdauer von höchstens 150 Sekunden und insbesondere höchstens 130 Sekunden und bevorzugt höchstens 120 Sekunden aufweist. Es ist nicht ausgeschlossen, dass das erste Zeitfenster und das zweite Zeitfenster gleich sind.

Als Abstandsmaß A kann dabei folgender Zusammenhang herangezogen werden: A=|p1 - p2|^n mit n > 0, und p1 als Messwert und p2 als Messwert oder ein Mittelwert.

Ein weiterer Grund für ungültige Messwerte der Asymmetrie-Wertefolge kann eine nur teilweise Füllung des mindestens einen Messrohrs des Coriolis-Messgeräts sein. In diesem Fall können die Amplituden der Messsignale der Sensoren stark voneinander abweichen. Eine nur teilweise Füllung kann beispielsweise bei einer vertikalen Ausrichtung des mindestens einen Messrohrs erfolgen, wenn aufgrund fehlenden Durchflusses ein Flüssigkeitsspiegel des Messrohrs auf ein Niveau zwischen erstem Sensor und zweitem Sensor absinkt. Dies kann erkannt werden durch Überprüfen der Zeit- oder Phasendifferenz oder einer davon abgeleiteten Größe und der Asymmetrie-Wertefolge.

Falls die Zeit- oder Phasendifferenz oder eine davon abgeleitete Größe einen zweiten Grenzwert unterschreitet und die Asymmetrie einen dritten Grenzwert überschreitet, dann wird auf eine Teilfüllung erkannt und ein letzter gültiger Messwert der Asymmetrie-Wertefolge als aktueller Wert der Asymmetrie-Wertefolge herangezogen, oder die Asymmetrie-Wertefolge auf einen vorherbestimmten Wert gesetzt.

### Bezugszeichenliste

- 1: Coriolis-Messgerät
- 10: Messrohr
- 10.1: Einlauf
- 10.2: Auslauf
- 10.3: Messrohrlumen
- 10.4: Messrohrwandung
- 11: Erreger
- 12.1: erster Sensor
- 12.2: zweiter Sensor
- 13: Spulenvorrichtung
- 13.1: Spule
- 14: Magnetvorrichtung
- 14.1: Magnet
- 16: Temperatursensor
- 60: Trägerkörper
- 77: elektronische Mess-/Betriebsschaltung
- 80: Gehäuse
- 100: Verfahren
- 101: Verfahrensschritt
- 102: Verfahrensschritt
- 103: Verfahrensschritt
- AS: Asymmetrie-Wertefolge
- SAS: stabilisierte Asymmetrie-Wertefolge
- Z1: erstes Zeitfenster
- Z2: zweites Zeitfenster

## Patentansprüche

1. Verfahren (100) zum Betreiben eines Coriolis-Messgeräts (1) zum Messen einer Dichte und/oder eines Massedurchflusses eines durch eine Rohrleitung strömenden Mediums,
wobei das Coriolis-Messgerät umfasst:
zumindest ein Messrohr (10) zum Führen des Mediums mit jeweils einem Einlauf (10.1) und einem Auslauf (10.2) und eine ein Messrohrlumen (10.3) einschließende Messrohrwandung (10.4);
zumindest einen Erreger (11) zum Erzeugen von Messrohrschwingungen sowie einen einlaufseitigen ersten Sensor (12.1) und einen auslaufseitigen zweiten Sensor (12.2) zum Erfassen von Messrohrschwingungen, wobei der Erreger sowie die Sensoren jeweils eine Spulenvorrichtung (13) mit mindestens einer Spule (13.1) und jeweils eine Magnetvorrichtung (14) mit mindestens einem Magnet (14.1) aufweisen,
wobei die Spulenvorrichtung sowie die Magnetvorrichtung eines jeden Sensors durch Messrohrschwingungen relativ zueinander bewegt werden, wobei in der Spule dabei eine elektrische Messspannung induziert wird;
eine elektronische Mess-/Betriebsschaltung (77) zum Betreiben des Erregers, zum Erfassen und Auswerten der elektrischen Messspannungen sowie zum Ausgeben von Messwerten von Dichte und/oder Massedurchflusses sowie von Diagnoseangaben,
wobei das Verfahren folgende Schritte aufweist:
Aufnehmen der Messspannungen der Sensoren sowie Erstellen einer Asymmetrie-Wertefolge (AS) mittels der Amplituden der Messpannungen zwecks Diagnose des Coriolis-Messgeräts in einem ersten Verfahrensschritt (101),
**dadurch gekennzeichnet, dass** das Verfahren folgende Schritte aufweist:
Überprüfen, ob die Asymmetrie-Wertefolge mindestens ein Ungültigkeitskriterium erfüllt in einem zweiten Verfahrensschritt (102),
Erstellen einer stabilisierten Asymmetrie-Wertefolge (SAS) basierend auf der Asymmetrie-Wertefolge durch Ersetzen von Asymmetrie-Messwerten durch Ersatzwerte in einem dritten Verfahrensschritt (103), wobei während Erfüllen eines Ungültigkeitskriteriums ein letzter gültiger Messwert der Asymmetrie-Wertefolge als aktueller Wert der stabilisierten Asymmetrie-Wertefolge herangezogen oder die stabilisierte Asymmetrie-Wertefolge auf einen vorherbestimmten Wert gesetzt wird,
wobei das erste Ungültigkeitskriterium auf einer Überschreitung eines ersten Grenzwerts durch einen Streuungsparameter der Asymmetrie-Wertefolge basiert.

2. Verfahren nach Anspruch 1,
wobei ein zweites Ungültigkeitskriterium auf einer Überschreitung oder Unterschreitung eines zweiten Grenzwerts durch eine Resonanzfrequenz des Messrohrs mit Medium oder einer davon abgeleiteten Größe wie beispielsweise einer Dichte basiert.

3. Verfahren nach Anspruch 1 oder 2,
wobei der Streuungsparameter eine Standardabweichung oder eine Varianz ist.

4. Verfahren nach einem der vorigen Ansprüche,
wobei das erste Ungültigkeitskriterium in einem ersten gleitenden Zeitfenster (Z1) ausgewertet wird.

5. Verfahren nach einem der vorigen Ansprüche,
wobei das zweite Ungültigkeitskriterium in einem zweiten gleitenden Zeitfenster (Z2) ausgewertet wird.

6. Verfahren nach Anspruch 4 oder 5,
wobei das erste Zeitfenster (Z1) eine Zeitdauer von mindestens 0.2 Sekunden und insbesondere mindestens 0.5 Sekunden und bevorzugt mindestens 1 Sekunde und/oder wobei das erste Zeitfenster eine Zeitdauer von höchstens 90 Sekunden und insbesondere höchstens 70 Sekunden und bevorzugt höchstens 60 Sekunden aufweist.

7. Verfahren nach Anspruch 5 oder 6,
wobei das zweite Zeitfenster (Z2) eine Zeitdauer von mindestens 2 Sekunden und insbesondere mindestens 4 Sekunden und bevorzugt mindestens 5 Sekunden und/oder wobei das zweite Zeitfenster eine Zeitdauer von höchstens 150 Sekunden und insbesondere höchstens 130 Sekunden und bevorzugt höchstens 120 Sekunden aufweist.

8. Verfahren nach einem der vorigen Ansprüche,
wobei falls die Zeit- oder Phasendifferenz oder eine davon abgeleitete Größe einen zweiten Grenzwert unterschreitet und die Asymmetrie einen dritten Grenzwert überschreitet,
ein letzter gültiger Messwert der Asymmetrie-Wertefolge als aktueller Wert der Asymmetrie-Wertefolge herangezogen wird,
oder die Asymmetrie-Wertefolge auf einen vorherbestimmten Wert gesetzt wird.

9. Verfahren nach einem der vorigen Ansprüche,
wobei Messwerte für eine Streuung bzw. Standardabweichung durch eine der folgenden Vorgehensweisen bestimmt wird:
Summieren über Abstände benachbarter Messwerte der Asymmetrie-Wertefolge,
Summieren über Abstände der Messwerte der Asymmetrie-Wertefolge zu einem Mittelwert von Messwerten der Asymmetrie-Wertefolge.

10. Verfahren nach Anspruch 9,
wobei ein Abstandsmaß A folgenden Zusammenhang aufweist:
A=|p1 - p2|^n mit n > 0, und p1 als Messwert und p2 als Messwert oder ein Mittelwert.

11. Verfahren nach einem der vorigen Ansprüche,
wobei eine Warnung ausgegeben wird, falls ein Betrag der stabilisierten Asymmetrie-Wertefolge (SAS) einen vierten Grenzwert überschreitet.

## Claims

1. A method (100) for operating a Coriolis measuring device (1) for measuring a density and/or a mass flow of a medium flowing through a pipeline, wherein the Coriolis measuring device comprises:
At least one measuring tube (10) for conducting the medium with one inlet (10.1) and one outlet (10.2), and one measuring tube wall (10.4) enclosing a measuring tube lumen (10.3);
at least one exciter (11) for generating measuring tube oscillations and one inlet-side first sensor (12.1) and one outlet-side second sensor (12.2) for detecting measuring tube oscillations, wherein the exciter and the sensors each have one coil device (13) with at least one coil (13.1) and one magnetic device (14) with at least one magnet (14.1),
wherein the coil device and the magnetic device of each sensor are moved relative to each other by measuring tube oscillations, wherein an electrical measuring voltage is induced in the coil in the process;
an electronic measuring/operating circuit (77) for operating the exciter, for detecting and analyzing the electrical measuring voltages, and for outputting measured values for density and/or mass flow and for diagnostics information,
wherein the method has the following steps:
Recording the measuring voltages of the sensors and creating an asymmetry value sequence (AS) using the amplitudes of the measuring voltages for the purpose of performing diagnostics on the Coriolis measuring device in a first process step (101),
**characterized in that** the method has the following steps:
Checking whether the asymmetry value sequence meets at least one invalidity criterion in a second process step (102),
creating a stabilized asymmetry value sequence (SAS) based on the asymmetry value sequence by replacing asymmetry measured values with substitute values in a third process step (103),
wherein while an invalidity criterion is met, a last valid measured value of the asymmetry value sequence is taken as the current value of the stabilized asymmetry value sequence, or the stabilized asymmetry value sequence is set to a previously defined value,
wherein the first invalidity criterion is based on a first limit value being exceeded by a dispersion parameter of the asymmetry value sequence.

2. The method as claimed in claim 1,
wherein a second invalidity criterion is based on a resonant frequency of the measuring tube containing the medium, or a variable derived therefrom, such as a density, exceeding or falling below a second limit value.

3. The method as claimed in claim 1 or 2,
wherein the dispersion parameter is a standard deviation or a variance.

4. The method as claimed in one of the preceding claims,
wherein the first invalidity criterion is analyzed in a first moving time window (Z1).

5. The method as claimed in one of the preceding claims,
wherein the second invalidity criterion is analyzed in a second moving time window (Z2).

6. The method as claimed in claim 4 or 5,
wherein the first time window (Z1) has a duration of at least 0.2 seconds, and in particular at least 0.5 seconds, and preferably at least 1 second, and/or wherein the first time window has a duration of up to 90 seconds, and in particular up to 70 seconds, and preferably up to 60 seconds.

7. The method as claimed in claim 5 or 6,
wherein the second time window (Z2) has a duration of at least 2 seconds, and in particular at least 4 seconds, and preferably at least 5 seconds, and/or wherein the second time window has a duration of up to 150 seconds, and in particular up to 130 seconds, and preferably up to 120 seconds.

8. The method as claimed in one of the preceding claims,
wherein if the time or phase difference, or a variable derived therefrom, falls below a second limit value and the asymmetry exceeds a third limit value,
a last valid measured value of the asymmetry value sequence is taken as the current value of the asymmetry value sequence,
or the asymmetry value sequence is set to a previously defined value.

9. The method as claimed in one of the preceding claims,
wherein measured values for a dispersion or standard deviation are determined by one of the following procedures:
Adding together the distances between adjacent measured values in the asymmetry value sequence,
adding together the distances between the measured values in the asymmetry value sequence to give an average value of measured values in the asymmetry value sequence.

10. The method as claimed in claim 9,
wherein a distance measurement A has the following correlation:
A=|p1 - p2|^n where n > 0, and p1 is a measured value and p2 is a measured value or an average value.

11. The method as claimed in one of the preceding claims,
wherein a warning is issued if a sum of the stabilized asymmetry value sequence (SAS) exceeds a fourth limit value.

## Revendications

1. Procédé (100) pour l'exploitation d'un débitmètre Coriolis (1) destiné à la mesure d'une densité et/ou d'un débit massique d'un produit s'écoulant dans une conduite, le débitmètre Coriolis comprenant :
au moins un tube de mesure (10) destiné à guider le produit, lequel tube comporte respectivement une entrée (10.1) et une sortie (10.2), ainsi qu'une paroi de tube de mesure (10.4) délimitant un canal intérieur (10.3) ;
au moins un excitateur (11) destiné à générer des vibrations du tube de mesure, ainsi qu'un premier capteur (12.1) situé côté entrée et un deuxième capteur (12.2) situé côté sortie, lesquels capteurs sont destinés à mesurer les vibrations du tube de mesure, l'excitateur ainsi que les capteurs comportant chacun un dispositif à bobine (13) comportant au moins une bobine (13.1) et respectivement un dispositif magnétique (14) comportant au moins un aimant (14.1),
le dispositif à bobine ainsi que le dispositif magnétique de chaque capteur étant déplacés l'un par rapport à l'autre par les vibrations du tube de mesure, une tension de mesure électrique étant alors induite dans la bobine ;
un circuit électronique de mesure et de fonctionnement (77) destiné à faire fonctionner l'excitateur, à mesurer et à analyser les tensions de mesure électriques, ainsi qu'à fournir des valeurs mesurées de la densité et/ou du débit massique ainsi que des informations de diagnostic,
le procédé comprenant les étapes suivantes :
Acquisition des tensions de mesure des capteurs ainsi que création d'une série de valeurs d'asymétrie (AS) à partir des amplitudes des tensions de mesure en vue du diagnostic du débitmètre Coriolis dans une première étape de procédé (101),
**caractérisé en ce que** le procédé comprend les étapes suivantes :
Vérification, dans une deuxième étape de procédé (102), si la série de valeurs d'asymétrie satisfait au moins un critère d'invalidité,
Création d'une série de valeurs d'asymétrie stabilisée (SAS) sur la base de la série de valeurs d'asymétrie par remplacement des valeurs mesurées d'asymétrie par des valeurs de remplacement lors d'une troisième étape de procédé (103), dans laquelle, une dernière valeur mesurée valide de la série de valeurs d'asymétrie étant utilisée - lorsqu'un critère d'invalidité est rempli - comme valeur actuelle de la série de valeurs d'asymétrie stabilisée ou la série de valeurs d'asymétrie stabilisée étant fixée à une valeur prédéterminée,
le premier critère d'invalidité étant basé sur le dépassement d'une première valeur limite par un paramètre de dispersion de la série de valeurs d'asymétrie.

2. Procédé selon la revendication 1,
pour lequel un deuxième critère d'invalidité est fondé sur le dépassement, par excès ou par défaut, d'une deuxième valeur limite par la fréquence de résonance du tube de mesure contenant le produit ou par une grandeur qui en est dérivée, telle que la densité.

3. Procédé selon la revendication 1 ou 2,
pour lequel le paramètre de dispersion est un écart-type ou une variance.

4. Procédé selon l'une des revendications précédentes,
pour lequel le premier critère d'invalidité est évalué dans une première fenêtre temporelle glissante (Z1).

5. Procédé selon l'une des revendications précédentes,
pour lequel le deuxième critère d'invalidité est évalué dans une deuxième fenêtre temporelle glissante (Z2).

6. Procédé selon la revendication 4 ou 5,
pour lequel la première fenêtre temporelle (Z1) présente une durée d'au moins 0,2 seconde, et notamment d'au moins 0,5 seconde, et de préférence d'au moins 1 seconde, et/ou
pour lequel la première fenêtre temporelle présente une durée d'au plus 90 secondes, et notamment d'au plus 70 secondes, et de préférence d'au plus 60 secondes.

7. Procédé selon la revendication 5 ou 6,
pour lequel la deuxième fenêtre temporelle (Z2) présente une durée d'au moins 2 secondes, et notamment d'au moins 4 secondes, et de préférence d'au moins 5 secondes, et/ou
pour lequel la deuxième fenêtre temporelle présente une durée d'au plus 150 secondes, et notamment d'au plus 130 secondes, et de préférence d'au plus 120 secondes.

8. Procédé selon l'une des revendications précédentes,
pour lequel, si la différence de temps ou de phase, ou une grandeur dérivée de l'une d'entre elles, passe en dessous d'une deuxième valeur limite et que l'asymétrie dépasse une troisième valeur limite,
la dernière valeur mesurée valide de la séquence de valeurs d'asymétrie est utilisée comme valeur actuelle de la série de valeurs d'asymétrie,
ou la série de valeurs d'asymétrie est fixée à une valeur prédéterminée.

9. Procédé selon l'une des revendications précédentes,
pour lequel la dispersion ou l'écart-type des valeurs mesurées est déterminé selon l'une des méthodes suivantes :
Somme des écarts entre les valeurs mesurées adjacentes de la série de valeurs d'asymétrie,
Somme des écarts entre les valeurs mesurées de la série de valeurs d'asymétrie et une valeur moyenne des valeurs mesurées de la série de valeurs d'asymétrie.

10. Procédé selon la revendication 9,
pour lequel un écart A satisfait à la relation suivante :
A = |p1 - p2|^n avec n > 0, et p1 étant une valeur mesurée et p2 une valeur mesurée ou une valeur moyenne.

11. Procédé selon l'une des revendications précédentes,
pour lequel un avertissement est émis si l'une des valeurs de la série de valeurs d'asymétrie stabilisée (SAS) dépasse une quatrième valeur limite.
